# EUROPÄISCHE PATENTSCHRIFT

(11) **EP 1 320 233 B1**
(45) Veröffentlichungstag und Bekanntmachung des Hinweises auf die Patenterteilung: **15.06.2005**
(21) Anmeldenummer: 01129523.5
(22) Anmeldetag: 11.12.2001
(51) Int. Cl.: H04L 29/06, H04L 12/26

(54) **Protokolltester mit mindestens zwei Kanälen**
Protocol tester with at least two channels
Dispositif de contrôle de protocole avec au moins deux canaux

(43) Veröffentlichungstag der Anmeldung: 18.06.2003
(73) Patentinhaber: Tektronix Berlin GmbH & Co. KG, 13629 Berlin (DE)
(72) Erfinder: Junkersdorf, Hans-Jürgen, 13156 Berlin (DE); Kolbe, Andreas, 12683 Berlin (DE); Vollmer, Hans-Ulrich, 12109 Berlin (DE)
(74) Vertreter: Schurack, Eduard F.

(56) Entgegenhaltungen:
- US-A- 5 375 159
- US-A- 5 974 363
- TEKTRONIX: "K1103 Protocol Tester" HTTP://WWW.TEK.COM/MEASUREMENT/PRODUCTS/CA TALOG/K1103/HW/2FW_11916_1.PDF, 1. Januar 1999 (1999-01-01), XP002200126
- AGILENT TECHNOLOGIES: "ATM Traffic Management Test Solution" HTTP://WWW.AGILENT-CSG-J.COM/PRODUCT/RD/PD F/5988-2897EN.PDF, 2. Mai 2001 (2001-05-02), XP002200127

## Beschreibung

Die vorliegende Erfindung betrifft einen Protokolltester mit mindestens zwei Kanälen, wobei jeder Kanal eine Sendeseite zum Senden eines Testsignals an ein Testobjekt und eine Empfangsseite zum Empfang des Testsignals vom Testobjekt umfasst. Sie betrifft überdies ein Verfahren zur näherungsweisen Ermittlung des Sendezeitpunkts eines Datenpakets in einem Protokolltester.

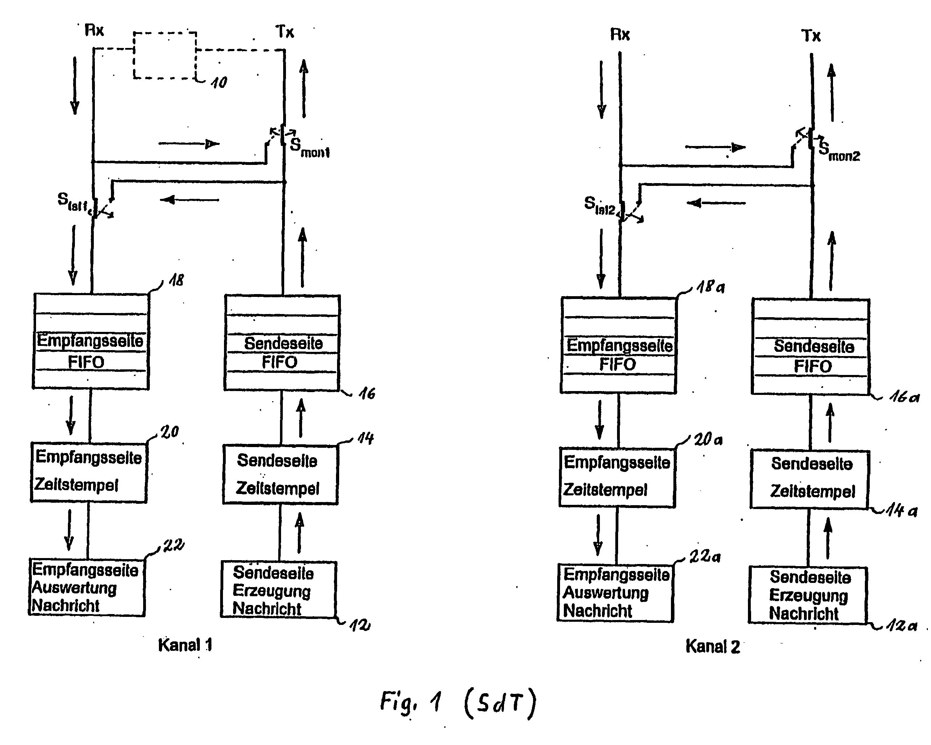

Die Problematik, die der vorliegenden Erfindung zugrunde liegt, soll am Beispiel einer aus dem Stand der Technik bekannten Anordnung, die in Figur 1 dargestellt ist, aufgezeigt werden. Figur 1 zeigt in schematischer Darstellung den Aufbau eines ersten und eines zweiten Kanals eines Protokolltesters. Kanal 1 und Kanal 2 sind identisch aufgebaut und weisen jeweils eine Sendeseite und eine Empfangsseite auf. Zum Testen eines Testobjekts 10, das gestrichelt eingezeichnet ist, wird zunächst in einem Block 12 auf der Sendeseite eine Nachricht erzeugt. In einem Block 14 wird diese mit einem Zeitstempel versehen und anschließend in einen Speicher 16, meistens einen FIFO, eingeschrieben. Je nach Belegungsgrad des FIFOs 16 wird die zu sendende Nachricht früher oder später an das Testgerät 10 geschickt, wobei das Ausgangssignal des Testobjekts 10 an die Empfangsseite des Kanals 1 gelegt wird. Dort durchläuft es zunächst einen empfangsseitigen Speicher 18, der ebenfalls bevorzugt als FIFO ausgeführt ist. Anschließend erhält die Nachricht im Block 20 einen Zeitstempel und wird schließlich im Block 22 ausgewertet.

Mittels eines Schalters Sₜₛₜ₁ kann das Sendesignal unter Umgehung des Testobjekts 10 direkt auf die Empfangsseite geleitet werden, um die Qualität des Sendesignals bzw. die Empfangseigenschaften dieses Kanals des Protokolltesters zu überprüfen.

Der Kanal 2 ist identisch aufgebaut, wobei die entsprechenden Baugruppen durch den Zusatz a gekennzeichnet sind. Dem Schalter Sₜₛₜ₁ entspricht im Kanal 2 der Schalter Sₜₛₜ₂.

Zwei Monitoringschalter Sₘₒₙ₁, Sₘₒₙ₂ ermöglichen ein Umschalten auf reinen Monitoring-Betrieb einer Zweikanalleitung zwischen zwei Netzwerkteilnehmern in der gestrichelt eingezeichneten Stellung. In der mit einer durchgezogenen Linie eingezeichneten Stellung können die zwei Netzwerkteilnehmer durch Sendesignale des Protokolltesters angesteuert werden.

Bei Protokolltestern, die Kommunikationsprotokolle simulieren bzw. emulieren, ist der Sendezeitpunkt möglichst genau zu bestimmen. Gemäß Figur 1 wird der Zeitstempel vergeben, bevor die zu übertragende Nachricht in den FIFO 16 eingeschrieben wird. Der Füllstand des FIFO 16 ist jedoch meistens unbekannt, so daß nicht exakt bestimmt werden kann, wann die Nachricht tatsächlich gesendet wird, das heißt tatsächlich die Sendeseite und damit den Speicher 16 verläßt.

Aus der Druckschrift "K1103 Protocoltester", herausgegeben von der Tektronix Inc. im Jahre 1999, ist ein Protokolltester bekannt, aus dem die Merkmale des Oberbegriffs von Patentanspruch 1 hervorgehen.

Aus der Druckschrift US-A-5,974,363 ist eine Anordnung für einen Selbsttest bekannt, die eine Sendeseite und eine Empfangsseite aufweist.

Der Erfindung liegt deshalb die Aufgabe zugrunde, einen Protokolltester der eingangs genannten Art bereitzustellen, der eine genauere Bestimmung des Sendezeitpunkts einer Nachricht ermöglicht. Weiterhin besteht die Aufgabe der vorliegenden Erfindung darin, ein Verfahren zur näherungsweisen Ermittlung des Sendezeitpunkts eines Datenpakets in einem Protokolltester zur Verfügung zu stellen.

Diese Aufgaben werden gelöst durch einen Protokolltester mit den Merkmalen von Patentanspruch 1 sowie ein Verfahren mit den Merkmalen von Patentanspruch 7.

Der Erfindung liegt die Erkenntnis zugrunde, daß insbesondere im Monitoring-Betrieb die Speicher auf der Empfangsseite fast immer leer sind bzw. im wesentlichen gleichen Füllungsgrad aufweisen, das heißt der Zeitstempel auf der Empfangsseite entspricht ungefähr dem tatsächlichen Empfangszeitpunkt der gesendeten Nachricht. Auf der Basis dieser Erkenntnis wird das Sendesignal zur Bestimmung des Sendezeitpunkts zum einen unmittelbar in einen Empfangskanal des Protokolltesters zurückgeleitet, zum anderen dem Testobjekt zugeführt, wobei das Ausgangssignal des Testobjekts über den anderen Empfangskanal des Protokolltesters empfangen wird.

Insbesondere wenn zwischen zwei Netzwerken Nachrichten hin- und hergeschickt werden, ist die Annahme berechtigt, daß die beiden Empfangsspeicher des erfindungsgemäßen Protokolltesters in etwa nahezu identisch gefüllt sind, so daß von der Zeitstempeleinheit des jeweiligen Empfangskanals vergebenen Zeitstempel mit ähnlichen Fehlem behaftet sind und deshalb miteinander verglichen werden können. Damit ergibt sich eine wesentlich geringere Meßunsicherheit als bei der aus dem Stand der Technik bekannten Methode, bei dem die Wartezeit in einem sendeseitigen Speicher gleichgesetzt wird mit der Wartezeit in einem empfangsseitigen Speicher.

Die erfindungsgemäße Maßnahme resultiert nicht in einer größeren Komplexität der Anwendung des Protokolltesters. Die Auswertung einer Simulation oder Emulation kann genauso geschehen, wie bei einer Monitoring-Applikation, das heißt ein Anwender verbindet das zu testende Objekt wie gewöhnlich mit einem Port, das heißt den zwei Leitungen eines Kanals eines erfindungsgemäßen Protokolltesters.

Die erfindunsgemäße Maßnahme resultiert weiterhin in dem Vorteil, daß eine logische Trennung zwischen Sende- und Empfangssignal ermöglicht wird. Um die gesendete Nachricht zu überprüfen, muß diese nicht umgeleitet werden, vielmehr kann diese nunmehr auch dem Nachbarkanal zugeführt werden.

Bevorzugt wird die erfindungsgemäße Maßnahme dadurch erreicht, daß im Empfangskanal eines Kanals ein Schalter angeordnet ist, mit dem umgeschaltet werden kann zwischen einem Empfang eines an den zugehörigen Empfangsanschluß des Protokolltesters angelegten Signals und einem Empfang des Sendesignals eines Sendekanals eines anderen Kanals des Protokolltesters.

Besonders exakte Zeitpunkte lassen sich ermitteln, wenn der Datenempfang im Protokolltester derart gesteuert wird, daß der/die Empfangssignalspeicher möglichst leer gehalten werden.

Bei einer bevorzugten Ausführungsform eines erfindungsgemäßen Protokolltesters ist der Sendesignalspeicher und/oder der Empfangssignalspeicher als FIFO-Speicher ausgeführt.

Weitere vorteilhafte Ausführungsformen der Erfindung sind in den Unteransprüchen angeführt.

Nachfolgend wird nunmehr ein Ausführungsbeispiel der Erfindung unter Bezugnahme auf die beigefügten Zeichnungen näher beschrieben.

Es stellen dar:
- Figur 1: ein Prinzipschaltbild eines aus dem Stand der Technik bekannten Protokolltesters mit zwei Kanälen, wobei jeder Kanal einen Sende- und einen Empfangskanal umfaßt;
- Figur 2: ein Prinzipschaltbild eines erfindungsgemäßen Protokolltesters, wobei die Schalterstellungen derart gewählt sind, daß die in Figur 1 dargestellte Konfiguration erzielt wird; und
- Figur 3: die in Figur 2 dargestellte Ausführungsform eines erfindungsgemäßen Protokolltesters, wobei der Schalter Sₜₛₜ₂ so gewählt ist, daß das Sendesignal von Kanal 1 mit dem Empfangskanal von Kanal 2 empfangen wird.

Für gleiche und gleichwirkende Elemente werden in den Figuren durchweg gleiche Bezugszeichen verwendet.

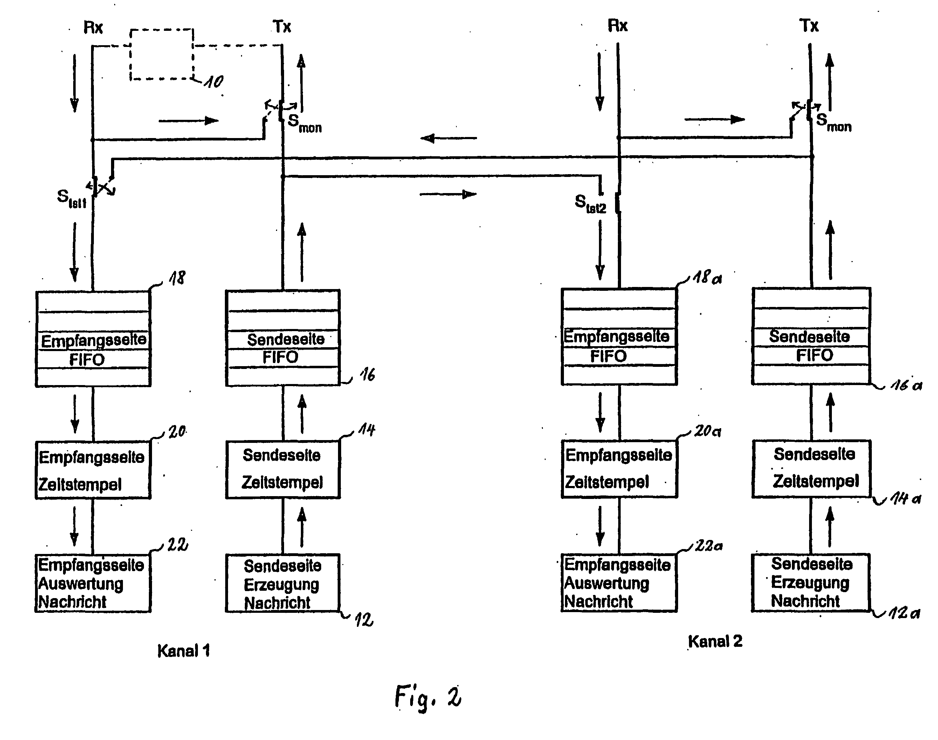

Gemäß Figur 2 ist erfindungsgemäß mit dem Schalter Sₜₛₜ₁ einerseits das am Rx-Anschluß von Kanal 1 ankommende Signal an die Empfangsseite des Kanals 1 anlegbar, zum anderen das von Kanal 2 gesendete Signal. Umgekehrt kann mit Schalter Sₜₛₜ₂ das am Rx-Anschluß von Kanal 2 ankommende Signal an den Empfangskanal von Kanal 2 angelegt werden, oder auch das Sendesignal von Kanal 1. In der gezeigten Stellung der Schalter Sₜₛₜ₁ und Sₜₛₜ₂ entspricht die Anordnung von Figur 2 hinsichtlich ihrer Funktion der von Figur 1.

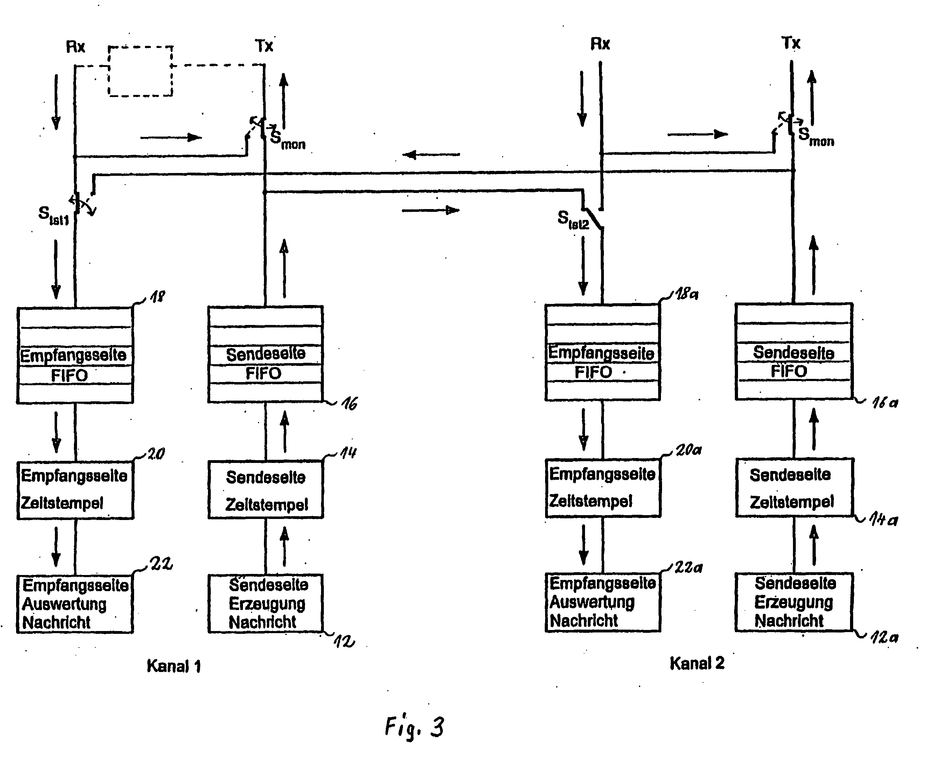

Figur 3 zeigt nunmehr die Anordnung von Figur 2, bei der sich nunmehr der Schalter Sₜₛₜ₂ in einer Stellung befindet, in der das Sendesignal von Kanal 1 an den Empfangskanal von Kanal 2 gelegt wird. Der von der Zeitstempeleinheit 20a des Empfangskanals von Kanal 2 ermittelte Zeitpunkt wird als Sendezeitpunkt für die vom Sendekanal von Kanal 1 gesendete Nachricht angenommen. Der Empfangszeitpunkt dieser Nachricht wird in üblicher Weise von der Zeitstempeleinheit 20 auf der Empfangsseite von Kanal 1 ermittelt. Da die beiden empfangsseitigen Speicher 18, 18a im wesentlichen einen ähnlichen Füllgrad aufweisen, sind die von den zugeordneten Zeitstempeleinheiten 20, 20a ermittelten Zeitpunkte im wesentlichen vergleichbar.

## Patentansprüche

1. Protokolltester mit mindestens zwei Kanälen, wobei jeder Kanal eine Sendeseite (Tx) zum Senden eines Testsignals an ein Testobjekt (10) und eine Empfangsseite (Rx) zum Empfang des Testsignals vom Testobjekt (10) umfaßt,
**dadurch gekennzeichnet,**
**daß** der Protokolltester Mittel (Sₜₛₜ₁, Sₜₛₜ₂) aufweist, die Sendeseite (Tx) eines Kanals (Kanal 1) gleichzeitig an das Testobjekt (10) und an die Empfangsseite (Rx) eines anderen Kanals (Kanal 2) zu koppeln.

2. Protokolltester nach Anspruch 1,
**dadurch gekennzeichnet,**
**daß** im Protokolltester im Empfangsweg einer Empfangsseite mindestens ein Empfangssignal-Speicher (18; 18a) und eine Empfangssignal-Zeitstempeleinheit (20; 20a) angeordnet sind derart, dass das empfangene Signal zunächst den mindestens einen Empfangssignal-Speicher (18; 18a) und anschließend die Empfangssignal-Zeitstempeleinheit (20; 20a) durchläuft.

3. Protokolltester nach Anspruch 1 oder 2,
**dadurch gekennzeichnet,**
**daß** im Protokolltester im Sendeweg einer Sendeseite mindestens ein Sendesignal-Speicher (16; 16a) und eine Sendesignal-Zeitstempeleinheit (14; 14a) angeordnet sind derart, dass das zu sendende Signal zunächst die Sendesignal-Zeitstempeleinheit (14; 14a) und anschließend den mindestens einen Sendesignal-Speicher (16; 16a) durchläuft.

4. Protokolltester nach einem der vorhergehenden Ansprüche,
**dadurch gekennzeichnet,**
**daß** die Mittel einen Schalter (Sₜₛₜ₁; Sₜₛₜ₂) umfassen, der in der Empfangsseite eines Kanals angeordnet ist, mit dem umgeschaltet werden kann zwischen einem Empfang eines an den zugehörigen Empfangsanschluß (Rx) des Protokolltesters angelegten Signals und einem Empfang des Sendesignals einer Sendeseite (Tx) eines anderen Kanals des Protokolltesters.

5. Protokolltester nach Anspruch 3,
**dadurch gekennzeichnet,**
**daß** der Sendesignal-Speicher (16; 16a) als FIFO-Speicher ausgeführt sind.

6. Protokolltester nach Anspruch 2,
**dadurch gekennzeichnet,**
**daß** der Empfangssignal-Speicher (18; 18a) als FIFO-Speicher ausgeführt sind.

7. Verfahren zur näherungsweisen Ermittlung des Sendezeitpunkts eines Datenpakets in einem Protokolltester, wobei der Protokolltester mindestens zwei Kanäle aufweist, wobei jeder Kanal eine Sendeseite (Tx) zum Senden eines Testsignals an ein Testobjekt (10) und eine Empfangsseite (Rx) zum Empfang des Testsignals vom Testobjekt (10) aufweist und in mindestens zwei Empfangsseiten eine Empfangssignal-Zeitstempeleinheit (20; 20a) angeordnet ist, folgende Schritte umfassend:
a) Senden eines Signals über die Sendeseite (Tx) eines ersten Kanals (Kanal 1) gleichzeitig an ein Testobjekt (10) und an die Empfangsseite eines zweiten Kanals (Kanal 2);
b) Mittels der jeweiligen Empfangssignal-Zeitstempeleinheiten (20; 20a) Zuordnen von Zeitstempeln den empfangenen Signalen auf den Empfangsseiten (Rx) des ersten (Kanal 1) und des zweiten Kanals (Kanal 2).

8. Verfahren nach Anspruch 7,
**dadurch gekennzeichnet,**
**daß** jedes Empfangssignal vor der Zuordnung eines Zeitstempels mindestens einen der entsprechenden Empfangsseite (Rx) zugeordneten Empfangssignal-Speicher (18; 18a) durchläuft.

## Claims

1. Protocol tester including at least two channels, each channel comprising a transmitting side (Tx) for transmitting a test signal to a test object (10) and a receiving side (Rx) for receiving the test signal from the test object (10),
**characterized in that**
the protocol tester has means (Sₜₛₜ₁, Sₜₛₜ₂) to simultaneously couple the transmitting side (Tx) of a channel (channel 1) to the test object (10) and to the receiving side (Rx) of another channel (channel 2).

2. Protocol tester according to claim 1,
**characterized in that**
in the protocol tester, in the receive path of a receiving side, at least one receive signal memory (18; 18a) and a receive signal time stamp unit (20; 20a) are disposed such that the received signal passes first the at least one receive signal memory (18; 18a) and subsequently the receive signal time stamp unit (20; 20a).

3. Protocol tester according to claim 1 or 2,
**characterized in that**
in the protocol tester, in the transmit path of a transmitting side, at least one transmit signal memory (16; 16a) and a transmit signal time stamp unit (14; 14a) are disposed such that the signal to be transmitted passes first the transmit signal time stamp unit (14; 14a) and subsequently the at least one transmit signal memory (16; 16a).

4. Protocol tester according to any one of the preceding claims,
**characterized in that**
the means comprise a switch (Sₜₛₜ₁; Sₜₛₜ₂) disposed in the receiving side of a channel, by which it can be switched between reception of a signal applied to the associated receiving terminal (Rx) of the protocol tester and reception of the transmit signal of a transmitting side (Tx) of another channel of the protocol tester.

5. Protocol tester according to claim 3,
**characterized in that**
the transmit signal memory (16; 16a) is configured as a FIFO memory.

6. Protocol tester according to claim 2,
**characterized in that**
the receive signal memory (18; 18a) is configured as a FIFO memory.

7. Method for approximate determination of the transmission time of a data packet in a protocol tester, wherein the protocol tester has at least two channels, wherein each channel has a transmitting side (Tx) for transmitting a test signal to a test object (10) and a receiving side (Rx) for receiving the test signal from the test object (10), and a receive signal time stamp unit (20; 20a) is disposed in at least two receiving sides, including the steps of:
a) transmitting a signal via the transmitting side (Tx) of a first channel (channel 1) at the same time to a test object (10) and to the receiving side of a second channel (channel 2);
b) by means of the respective receive signal time stamp units (20; 20a), assigning time stamps to the received signals on the receiving sides (Rx) of the first (channel 1) and the second channel (channel 2).

8. Method according to claim 7,
**characterized in that**
each receive signal passes at least one of the receive signal memories (18; 18a) associated with the corresponding receiving side (Rx) before assignment of a time stamp.

## Revendications

1. Dispositif de contrôle de protocole comprenant au moins deux canaux, chacun des canaux présentant un côté émetteur (Tx) prévu d'émettre un signal de test à un objet de test (10) ainsi qu'un côté récepteur (Rx) prévu de recevoir le signal de test de l'objet de test (10),
**caractérisé en ce que** le dispositif de contrôle de protocole comporte des moyens (Sₜₛₜ₁, Sₜₛₜ₂) permettant le couplage simultané du côté émetteur (Tx) d'un canal (canal 1) à l'objet de test (10) et au côté récepteur (Rx) d'un autre canal (canal 2).

2. Dispositif de contrôle de protocole selon la revendication 1,
**caractérisé en ce que** dans ledit dispositif, au moins une mémoire de signaux de réception (18; 18a) ainsi qu'un horodateur des signaux de réception (20; 20a) sont disposés sur la voie de réception d'un côté récepteur de sorte que le signal reçu parcourt d'abord l'au moins une mémoire de signaux de réception (18; 18a) et ensuite l'horodateur des signaux de réception (20; 20a).

3. Dispositif de contrôle de protocole selon la revendication 1 ou 2,
**caractérisé en ce que** dans ledit dispositif, au moins une mémoire de signaux d'émission (16; 16a) ainsi qu'un horodateur des signaux d'émission (14; 14a) sont disposés sur la voie d'émission d'un côté émetteur de sorte que le signal à émettre parcourt d'abord l'horodateur des signaux d'émission (14; 14a) et ensuite l'au moins une mémoire de signaux d'émission (16; 16a).

4. Dispositif de contrôle de protocole selon l'une des revendications précédentes,
**caractérisé en ce que** lesdits moyens comportent un interrupteur (Sₜₛₜ₁; Sₜₛₜ₂) disposé sur le côté récepteur d'un canal, permettant le basculement entre une réception d'un signal appliqué au raccord de réception (Rx) correspondant du dispositif de contrôle de protocole et une réception du signal d'émission d'un côté émission (Tx) d'un autre canal du dispositif de contrôle de protocole.

5. Dispositif de contrôle de protocole selon la revendication 3,
**caractérisé en ce que** la mémoire de signaux d'émission (16; 16a) est prévue sous forme d'une mémoire premier entré-premier sorti.

6. Dispositif de contrôle de protocole selon la revendication 2,
**caractérisé en ce que** la mémoire de signaux de réception (18; 18a) est prévue sous forme d'une mémoire premier entré-premier sorti.

7. Procédé de détermination approximative du moment d'émission d'un paquet de données dans un dispositif de contrôle de protocole, ce dernier comportant au moins deux canaux, chacun desdits canaux présentant un côté émetteur (Tx) prévu d'émettre un signal de test à un objet de test (10) ainsi qu'un côté récepteur (Rx) prévu de recevoir le signal de test de l'objet de test (10), un horodateur des signaux de réception (20; 20a) étant disposé dans au moins deux côtés récepteurs, comprenant les étapes suivantes:
a) transmission simultanée d'un signal via le côté émetteur (Tx) d'un premier canal (canal 1) à un objet de test (10) et au côté récepteur d'un deuxième canal (canal 2);
b) attribution de timbres dateurs aux signaux reçus aux côtés récepteurs (Rx) du premier canal (canal 1) et du deuxième canal (canal 2), à l'aide des horodateurs des signaux de réception (20; 20a) correspondants.

8. Procédé selon la revendication 7,
**caractérisé en ce que** chacun des signaux de réception parcourt, avant l'attribution d'un timbre dateur, au moins une mémoire de signaux de réception (18; 18a) attribuée au côté récepteur (Rx) correspondant.
